# EUROPÄISCHE PATENTSCHRIFT

(11) **EP 3 198 304 B1**
(45) Veröffentlichungstag und Bekanntmachung des Hinweises auf die Patenterteilung: **19.07.2023**
(21) Anmeldenummer: 15762537.7
(22) Anmeldetag: 03.09.2015
(51) Int. Cl.: G01S 19/49

(54) **KEY-INBETWEEN-KONZEPT FÜR BESTIMMUNG VON LAGEDATEN EINES FAHRZEUGES**
KEY INBETWEEN CONCEPT FOR DETERMINING POSITIONAL DATA OF A VEHICLE
CONCEPT DE KEY-INBETWEEN POUR DÉTERMINER LES DONNÉES DE POSITION D'UN VÉHICULE

(30) Priorität: 24.09.2014 DE 102014219351
(43) Veröffentlichungstag der Anmeldung: 02.08.2017
(73) Patentinhaber: Continental Automotive Technologies GmbH, 30165 Hannover (DE)
(72) Erfinder: STÄHLIN, Ulrich, 65760 Eschborn (DE)
(74) Vertreter: Continental Corporation
(86) Internationale Anmeldenummer: PCT/EP2015/070145
(87) Internationale Veröffentlichungsnummer: WO 2016/045931

(56) Entgegenhaltungen:
- EP-A1- 2 541 198
- EP-A2- 2 363 732
- DE-A1-102012 224 103
- US-A1- 2012 109 517

## Beschreibung

Die Erfindung betrifft ein Verfahren zum Bestimmen von Lagedaten eines Fahrzeuges, eine Steuervorrichtung zur Durchführung des Verfahrens und das Fahrzeug mit der Steuervorrichtung.

WO 2013 / 037 844 A2 ist ein Verfahren zum Bestimmen von Lagedaten eines Fahrzeuges bekannt. Im Rahmen dieses Verfahrens wird eine Absolutposition des Fahrzeuges über ein GNSS genanntes globales Navigationssatellitensystem an einer ersten Position bestimmt und mit Fahrdynamikdaten des Fahrzeuges fusioniert.

Die EP 2 541 198 A1 offenbart Positionsmessungen für ein Fahrzeug mittels eines Dead-Reckoning-Only-Mode, eines GPS-Only-Mode und einer als Mixed-Mode benannten Kombination von Dead-Reckoning und GPS, abhängig von der Verfügbarkeit von GPS Daten und Rad-Kalibrierungs- Daten. Falls keine GPS-Daten verfügbar sind, wird der Dead-Reckoning-Only-Mode verwendet, andernfalls wird der Mixed-Mode verwendet.

Die EP 2 363 732 A2 offenbart Positionsmessungen für ein Fahrzeug mittels einer Fusion aus GPS- und Dead-Reckoning-Positionsdaten falls GPS-Daten verfügbar sind oder andernfalls allein mittels Dead-Reckoning- Positionsdaten.

Es ist Aufgabe der Erfindung, die drahtlose Aktualisierung von Steuergeräten in Fahrzeugen über Mobilfunknetzwerke zu verbessern.

Die Aufgabe wird durch die Merkmale der unabhängigen Ansprüche gelöst. Bevorzugte Weiterbildungen sind Gegenstand der abhängigen Ansprüche. Gemäß einem Aspekt der Erfindung umfasst ein Verfahren zum Bestimmen von Lagedaten eines Fahrzeuges nach einem Key-Inbetween Konzept, gemäß welchem die Lagedaten als Schlüsselpositionen mit hoher Genauigkeit und als zwischen den Schlüsselpositionen gelegene Inbetweenpositionen mit geringerer Genauigkeit ermittelt werden, umfassend die Schritte:
- Bestimmen einer Schlüsselposition zu einem ersten Zeitpunkt basierend auf einem ersten Algorithmus, bei dem eine Bewegung des Fahrzeuges beschreibende Fahrdynamikdaten und eine Absolutposition des Fahrzeuges fusioniert werden,
- Bestimmen einer Inbetweenposition zu einem zweiten Zeitpunkt basierend auf einem zweiten Algorithmus, der zum ersten Algorithmus vergleichsweise einfach, rechenressourcensparend und verschieden ist, wobei die Lagedaten beim zweiten Algorithmus frei von der Absolutposition bestimmt werden, und wobei die Schlüsselposition auf Basis eines, von einer Start-Absolutposition ausgehenden, fortgeschriebenen Wegs und eines, von einer Ziel-Absolutposition ausgehenden, zurückgeschriebenen Wegs, korrigiert wird.

Dem angegebenen Verfahren liegt die Überlegung zugrunde, dass die Genauigkeit der Lokalisierung eines Fahrzeuges auf Basis eines GNSS genannten globalen Navigationssatellitensystems von der Rechenleistung und vom Aufwand bezüglich der Sensorik abhängig ist. Je präziser die Lokalisierung des Fahrzeuges durchgeführt und damit die Lagedaten des Fahrzeuges sein sollen, umso größer ist die hierfür notwendige Rechenleistung. An besonderen Stellen wie zum Beispiel bei Tunneleinfahrten und - ausfahrten, in Häuserschluchten, und so weiter sind besonders rechenlastige Algorithmen für die Bestimmung der Lagedaten und damit zur Lokalisierung des Fahrzeuges notwendig, weil die Präzision nicht anders erreicht werden kann. Es ist aber wirtschaftlich nicht vertretbar für diese vergleichsweise selten auftretenden Stellen eine entsprechende Hardware bereitzustelle, die diese hohe Rechenleistung dann garantiert.

Hier setzt das angegebene Verfahren mit der Überlegung an, das Konzept Key-Inbetween, das aus der Animation handgezeichneter Grafiken bekannt ist, bei der Lokalisierung des Fahrzeuges zu verwenden. Hierunter wird die Anfertigung sogenannter Key-Zeichnungen mit großer Sorgfalt verstanden, zwischen die sogenannte Inbetween-Zeichnungen mit einer reduzierten Qualität eingebracht werden. Dieses Konzept wird im Rahmen des angegebenen Verfahrens angewendet. Dabei werden zwei Algorithmen verwendet. Ein aufwändiger und rechenlastiger Algorithmus liefert die absolute Position sehr genau. Im Rahmen dieses Algorithmus können auch Dinge wie tightly-coupling oder evtl. eine Rückwärtsnachführung der Lagedaten verwendet werden. Zwischen der Berechnung der Lagedaten des Fahrzeuges mit diesem aufwändigen und rechenlastigen Algorithmus werden die Lagedaten vergleichsweise einfachen und rechenressourcensparend mit einem davon verschiedenen Algorithmus errechnet.

Auf diese Weise kann die Rechenlast zur Lokalisierung reduziert werden, obwohl ein hochpräziser Algorithmus verwendet wird, der selbst an kritischen Stellen eine hohe Qualität der Lagedaten garantiert.

In einer Weiterbildung des angegebenen Verfahrens werden beim zweiten Algorithmus die Lagedaten wenigstens basierend auf den Fahrdynamikdaten nachgeführt. Hierbei wird nicht die Absolutposition des Fahrzeuges selbst berücksichtigt, sondern lediglich errechnet, wie sich die Position des Fahrzeuges ändert. Daher können die Lagedaten des Fahrzeuges beim zweiten Algorithmus frei von der Absolutposition bestimmt werden.

In einer Weiterbildung des angegebenen Verfahrens werden die Lagedaten nach dem zweiten Algorithmus gestützt auf einer oder mehreren Absolutpositionen, vorzugsweise zwei Absolutpositionen, des Fahrzeugs bestimmt oder approximiert.

In einer Weiterbildung des angegebenen Verfahrens werden die Lagedaten nach dem zweiten Algorithmus mittels zwei Absolutpositionen gestützt bestimmt, wobei die Bestimmung von den Absolutpositionen hin zu einem zwischen den Absolutpositionen befindenden Mittelpunkt durchgeführt wird.

In einer anderen Weiterbildung des angegebenen Verfahrens wird die Bestimmung der Lagedaten basierend auf dem zweiten Algorithmus über einen vorbestimmten Zeitraum mehrmals durchgeführt, bevor die die Bestimmung der Lagedaten basierend auf dem ersten Algorithmus wiederholt wird. Wird beispielsweise über dem vorbestimmten Zeitraum eine Loopzeit von T angenommen, so könnten zu jedem Zeitschritt T die Lagedaten auf Basis der Fahrdynamikdaten nachgeführt werden. Eine Stützung dieser Nachführung durch Daten aus dem GNSS soll dabei nicht ausgeschlossen werden. Es sollte jedoch vermieden werden aus den GNSS-Daten die Absolutposition zu errechnen, weil das die Rechenlast für eine hohe geforderte Genauigkeit erhöht. Der vorbestimmte Zeitraum kann dann n x T Zeitschritte lang sein, wobei n eine positive ganze Zahl ist, so dass nach diesen n x T Zeitschritten der aufwändige und rechenlastige Algorithmus verwendet wird, um die Absolutposition präzise und hochqualitativ zu berechnen.

In einer Weiterbildung des angegebenen Verfahrens werden die Anzahl der Wiederholungen zur Bestimmung der Lagedaten basierend auf dem ersten Algorithmus innerhalb des Zeitraums von der Verfügbarkeit von GNSS Signalen, Fahrtgeschwindigkeit, Gefahrensituation und / oder der zum Ausführen des Verfahrens zur Verfügung stehenden Rechenkapazität einer Recheneinrichtung angepasst.

In einer Weiterbildung des angegebenen Verfahrens wird der Zeitraum zur Bestimmung der Lagedaten nach dem zweiten Algorithmus danach ausgewählt, wofür eine Positionsanforderung vorliegt, insbesondere durch ein anderes Fahrzeugsystem.

In einer besonderen Weiterbildung des angegebenen Verfahrens kann der erste Algorithmus auf eine Langzeitstabilität der Lagedaten optimiert sein. Dabei kann der zweite Algorithmus auf eine Kurzzeitpräzision der Lagedaten optimiert sein.

In einer anderen Weiterbildung des angegebenen Verfahrens können der erste Algorithmus und der zweite Algorithmus auf verschiedenen Recheneinrichtungen durchgeführt werden. Auf diese Weise werden die beiden Algorithmen auch strukturell voneinander getrennt und liefern voneinander verwertbare Ergebnisse. Bei einem Ausfall eines der beiden Recheneinrichtungen in einer Steuervorrichtung kann aus der Nachführung oder Fortschreibung der Lagedaten aus dem zweiten Algorithmus auf die Absolutposition des Fahrzeuges geschlossen werden. Fällt jedoch der zweite Algorithmus aus, so kann aus der Ableitung der Absolutposition aus dem ersten Algorithmus zwischen zwei verschiedenen Zeitpunkten auf die Bewegung des Fahrzeuges zwischen den Zeitpunkten geschlossen werden. Dies könnte dann zumindest für eine kurze Zeit geschehen, bis das Fahrzeug in einem sicheren Zustand ist.

Gemäß einem weiteren Aspekt der Erfindung ist eine Steuervorrichtung eingerichtet, eines der angegebenen Verfahren durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem anderen Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit einer Zeichnung näher erläutert werden, wobei:
Fig. 1 eine Prinzipdarstellung eines Fahrzeuges auf einer Straße,
Fig. 2 eine Prinzipdarstellung des Fahrzeuges der Fig. 1 auf der Straße,
Fig. 3 ein Schaubild zur Erläuterung eines Prinzips zur Bestimmung eines Weges des Fahrzeuges der Fig. 1 auf der Straße, und
Fig. 4 eine Prinzipdarstellung eines Fusionssensors in dem Fahrzeug der Fig. 1,
Fig. 5 ein Diagramm mit einem zeitlichen Verlauf von Lagedaten, und
Fig. 6 eine Prinzipdarstellung des Fusionssensors der Fig. 4 im Verbund mit einem weiteren Fusionssensor zeigen.

In den Figuren werden gleiche technische Elemente mit gleichen Bezugszeichen versehen und nur einmal beschrieben.

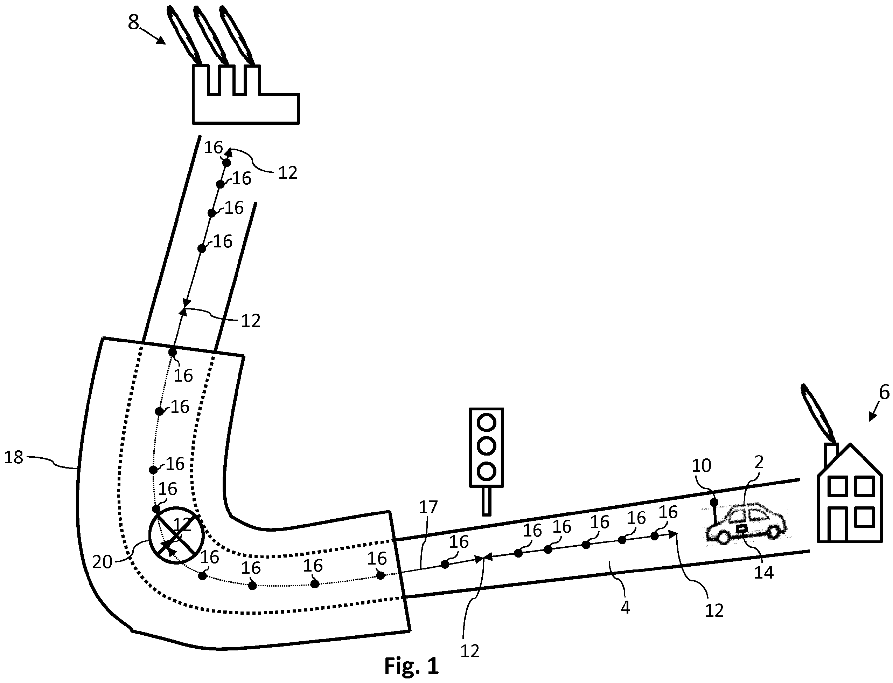

Es wird auf Fig. 1 Bezug genommen, die Fahrzeug 2 auf einer Straße 4 zeigt, dass zwischen Startpunkt 6 und einem Zielpunkt 8 fährt.

Das Fahrzeug 2 besitzt eine Antenne 10 zum Empfang eines Signals aus einem globalen Satellitennavigationssystem, nachstehend GNSS genannt. Die Antenne 10 wird daher nachstehend als GNSS-Antenne 10 bezeichnet. Über die GNSS-Antenne 10 kann das Fahrzeug 2 in einer noch zu beschreibenden Weise in regelmäßigen zeitlichen Abständen seine Absolutposition 12 auf der Straße 4 bestimmen.

Ferner besitzt das Fahrzeug 2 einen Fahrdynamiksensor 14. Der Fahrdynamiksensor 14 erfasst die Bewegung des Fahrzeuges 2 und gibt in regelmäßigen zeitlichen Abständen Fahrdynamikdaten 16 aus, die die Fahrdynamik des Fahrzeuges 2 beschreiben. Dabei sind die zeitlichen Abstände bei der Erfassung der Absolutposition 12 des Fahrzeuges 2 größer, als die zeitlichen Abstände bei der Erfassung der Fahrdynamikdaten 16.

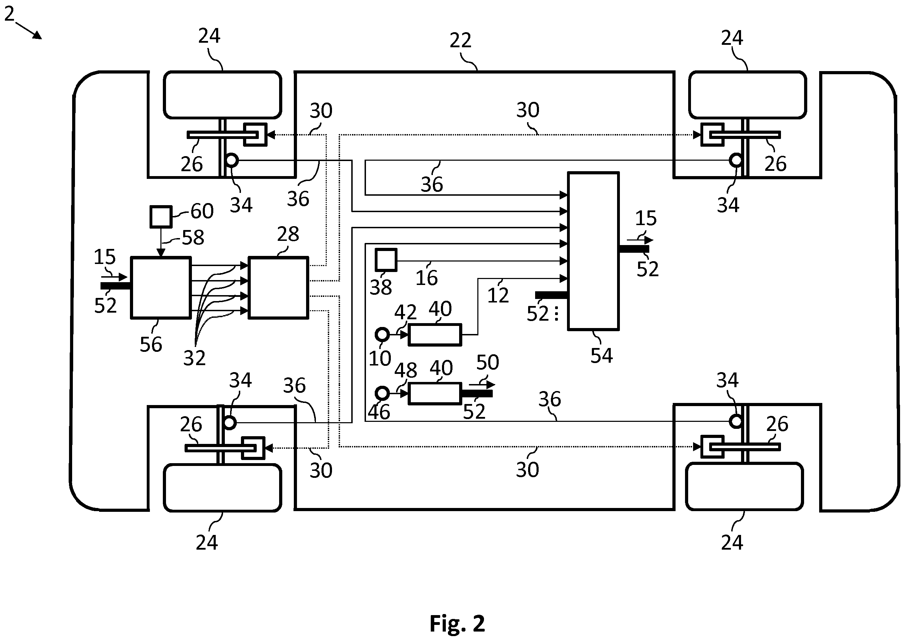

Die Absolutposition 12 und die Fahrdynamikdaten 16 können dann zu in Fig. 2 angedeuteten Lagedaten 15 des Fahrzeuges 2 fusioniert werden, die die Lage des Fahrzeuges 2 hinsichtlich Position, Geschwindigkeit und Beschleunigung in bis zu sechs Freiheitsgraden präzise beschreiben. Allgemein ausgedrückt wird mit der Absolutposition 12 und den Fahrdynamikdaten 16 ein Weg 17 erfasst, den das Fahrzeug 2 auf der Straße 4 fährt.

Ist das GNSS jedoch beispielsweise unter einem Tunnel 18 abgeschattet, dann kann keine Absolutposition 12 erfasst werden. Das ist in Fig. 1 durch ein entsprechendes Kreuz 20 angedeutet. Bei der Ausfahrt aus dem Tunnel 18, wenn das GNSS wieder verfügbar ist, muss das Fahrzeug 2 dann den Weg 17 des Fahrzeuges 2 erst wieder neu bestimmen. Da das GNSS die Absolutposition 12 des Fahrzeuges 2 jedoch nur sehr unpräzise beschreibt, kann dies eine Zeit dauern.

Um Lagedaten 15 dennoch mit einer maximal möglichen Präzision zu erzeugen, können aus zwei aufeinanderfolgenden Absolutpositionen 12 und dazwischenliegenden Fahrdynamikdaten 16 zwei verschiedene Wege 17 abgeleitet werden. Ein erster Weg 17 beschreibt, die Bewegung des Fahrzeuges 2 ausgehend von der Start-Absolutposition 12, ohne die Ziel-Absolutposition 12 zu berücksichtigen. Ein zweiter Weg 17 beschreibt die Bewegung des Fahrzeuges 2 zur Ziel-Absolutposition 12, ohne die Start-Absolutposition 12 zu berücksichtigen. Die beiden Wege 17 können dann beispielsweise durch eine Sensorfusion miteinander verknüpft werden. Darauf wird an späterer Stelle näher eingegangen.

Zunächst soll das Fahrzeug 2 näher betrachtet werden. Es wird auf Fig. 2 Bezug genommen, die eine schematische Ansicht des Fahrzeuges 2 zeigt.

Das Fahrzeug 2 umfasst ein Chassis 22 und vier Räder 24. Jedes Rad 24 kann über ortsfest am Chassis 22 befestigte Aktoren in seiner Bewegung gesteuert werden. In Fig. 2 sind beispielhaft Bremsen 26 gezeigt, die das jeweilige Rad 24 gegenüber dem Chassis 4 verlangsamt können, um eine Bewegung des Fahrzeuges 2 auf einer nicht weiter dargestellten Straße zu verlangsamen.

Zur Ansteuerung der Aktoren sind in dem Fahrzeug 2 Aktorsteuervorrichtungen vorhanden. In Fig. 2 ist als Aktorsteuervorrichtung eine Bremssteuervorrichtung 28 gezeigt, die mit Bremsauslösesignalen 30 die Bremsen 26 in einer an sich bekannten Weise auszulösen. Die Auslösung der Bremsen 26 wird der Bremssteuervorrichtung 28 mit Steuersignalen 32 vorgegeben.

Die Steuersignale 32 werden entweder vom Fahrer des Fahrzeuges 2 oder von Applikationen in dem Fahrzeug 2 erzeugt. Derartige sind in der Regel sogenannte Fahrerassistenzsysteme, die mit einer am Fahrzeug 2 vorhandenen Sensorik das Fahrzeug 2 über die Aktoren, wie die Bremsen 26 in einem Sollzustand halten.

Die Sensorik des Fahrzeuges 2 kann beispielsweise an jedem Rad 24 einen Drehzahlsensoren 34 zur Erfassung der Drehzahl 36 des jeweiligen Rades umfassen. Ferner kann die Sensorik des Fahrzeuges 2 einen Fahrdynamiksensor 38 zur Erfassung der Fahrdynamikdaten 16 des Fahrzeuges 2 umfassen, die eine Bewegung des Fahrzeuges 2 in bestimmten Freiheitsgraden beschreiben. Die Fahrdynamikdaten 16 können eine Nickrate, eine Wankrate, eine Gierrate, eine Längsbeschleunigung, eine Querbeschleunigung und/oder eine Hochachsenbeschleunigung beschreiben. Ferner kann die Sensorik des Fahrzeuges 2 einen GNSS-Empfänger 40 umfassen, der über die GNSS-Antenne 10 ein GNSS-Signal 42 empfängt und daraus in an sich bekannter Weise die Absolutposition 12 des Fahrzeuges 2 ableitet. Zur Sensorik des Fahrzeuges 2 kann auch ein sogenannter Car2X-Transmitter 44 gezählt werden, der über eine Car2X-Antenne 46 aus einem Fahrzeug-Ad-Hoc-Netzwerk Nachrichtensignale 48 empfangen und Botschaften 50 von anderen Fahrzeugen in dem Fahrzeug-Ad-Hoc-Netzwerk extrahieren kann. Diese Botschaften 50 enthalten in der Regel zumindest die Positionsdaten der Fahrzeuge.

Die Daten der Sensorik können über direkte Verbindungen oder über einen Datenbus 52 im Fahrzeug 2 versendet werden.

Die gesamten Daten oder wenigstens ein Teil der Daten aus der Sensorik können einem Fusionssensor 54 zugeführt werden, der die Daten der Sensorik fusionieren kann, um die mit der Sensorik gewonnen Informationen zu präzisieren und/oder neue Informationen zu gewinnen. Ein Ergebnis des Fusionssensors 54 können beispielsweise die oben erwähnten Lagedaten 15 sein, die dann in den Datenbus 52 eingespeist werden.

Die Lagedaten 15 können dann von den oben genannten Applikationen verwendet werden, um die Aktorsteuervorrichtungen anzusteuern. Im Rahmen der vorliegenden Ausführung soll als beispielhaft Applikation ein zu den Fahrerassistenzsystemen gehörende Fahrdynamikregelung 56 erläutert werden.

Die Fahrdynamikregelung 56 erfasst die Lagedaten 15 des Fahrzeuges 2 und einen Lenkwinkel 58 des Fahrzeuges 2, der beispielsweise über ein Lenkrad 60 vom Fahrer vorgebbar ist. Der Lenkwinkel 60 definiert eine Fahrtrajektorie für das Fahrzeug 2 entlang des Weges 17. Auf diesem Weg dreht sich das Fahrzeug 2 mit einer vorbestimmten Gierrate.

Verliert das Fahrzeug 2 beispielsweise auf einer rutschigen Straße seine Bodenhaftung dann beginnt es zu untersteuern oder zu übersteuern und dreht sich mit einer Gierrate, die von der durch die Fahrtrajektorie vorgegebenen Gierrate abweicht. Diese Gierratenabweichung kann von der Fahrdynamikregelung 56 basierend auf den Lagedaten 15 erfasst werden. Als Reaktion auf die Gierratenabweichung gibt die Fahrdynamikregelung 56 die Steuersignale 32 derart aus, dass die Bremsen 26 individuell angesteuert werden, so dass dem Fahrzeug 2 eine Gierrate aufgezwungen wird. Diese Gierrate wirkt der Gierrate beim Untersteuern oder Übersteuern entgegen und hebt die zuvor genannte Gierratenabweichung wieder auf, so dass das Fahrzeug 2 stabil auf seinem Weg 17 gehalten wird.

Weitere in dem Fahrzeug 2 verwendbare Applikationen sind eine Applikation zum hochautomatisierten Fahren (HAF), ein automatischer Bremsassistent oder dergleichen.

Nachstehend soll die im Rahmen der Fig. 1 erläuterte Sensorfusion näher beschrieben werden, um Rahmen derer präzise Lagedaten 15 selbst dann bereitgestellt werden sollen, wenn die Absolutposition 12 des Fahrzeuges 2 beispielsweise unter dem Tunnel 18 nicht verfügbar ist.

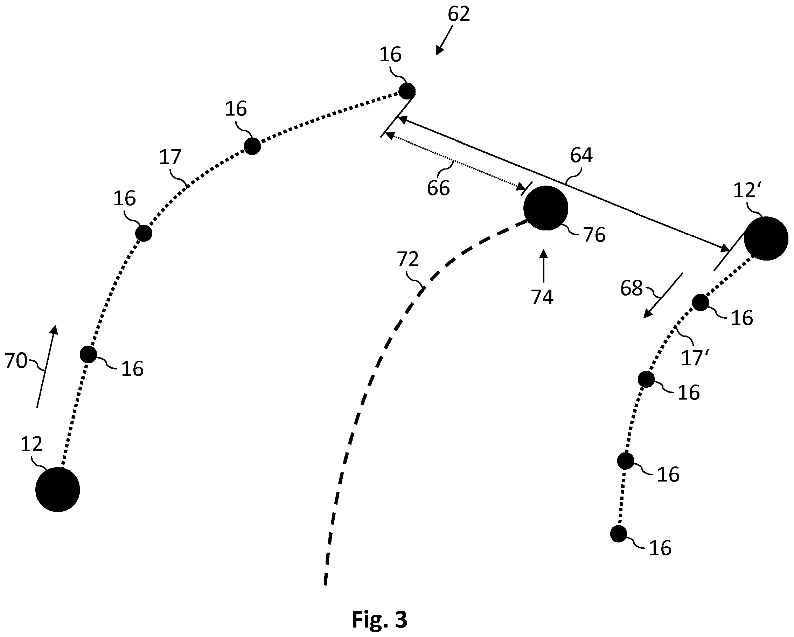

Hierzu wird auf Fig. 3 Bezug genommen, die eine schematische Darstellung von zwei erfassten Absolutpositionen 12, 12' des Fahrzeuges 2 zeigt.

Unter der Annahme, dass für das Fahrzeug 2 eine Start-Absolutposition 12 erfasst wurde, dann kann diese in einer noch zu beschreibenden Weise beispielsweise mit einem Strap-Down-Alorithmus basierend auf den Fahrdynamikdaten 16 fortgeschrieben werden. Es ergibt sich somit ein Weg 17, den das Fahrzeug 2 ausgehend von der Start-Absolutposition 12 zurückgelegt hat.

Wird nun eine weitere Absolutposition 12' als Ziel-Absolutposition 12' am Ende 62 des Weges 17 erfasst, dann kann verglichen werden, welchen Abstand 64 das Ende 62 des von der Start-Absolutposition 12 aus fortgeschriebenen Weges 17 von dieser Ziel-Absolutposition 12' hat. Überschreitet der Abstand 64 einen vorbestimmten Abstand 66 als vorbestimmte Bedingung, dann kann ein Korrekturverfahren ausgelöst werden, um die Ziel-Absolutposition 12' zu präzisieren. Das Korrekturverfahren kann aber auch stets ausgeführt werden. Hierzu wird der Weg 17 des Fahrzeuges 2 ausgehend von der Ziel-Absolutposition 12' basierend auf den Fahrdynamikdaten 16 zurückgeschrieben, was nachstehend durch das Bezugszeichen 17' angedeutet werden soll. Das Zurückschreiben grenzt sich vom oben genannten Fortschreiben dadurch ab, dass der Weg 17` beim Zurückschreiben in einer Richtung 68 betrachtet wird, die zeitlich einer Richtung 70 beim Fortschreiben des Weges 17 entgegengerichtet ist. Ansonsten kann der Weg 17` beim Zurückschreiben grundsätzlich mit denselben Algorithmen erzeugt werden, wie beim Fortschreiben, muss es jedoch nicht.

Die beiden zu erzeugten Wege 17, 17' werden dann miteinander verknüpft. Hierzu kann beispielsweise ein Mittelwert zwischen den beiden Wegen 17, 17' gebildet werden. Ein derartiger Mittelwertweg 72 ist in Fig. 3 gestrichelt angedeutet.

Ein sich am Ende 74 dieses Mittelwertweges 72 ergebende Korrekturposition 76 kann dann als Start-Absolutposition 12 für den nächsten Weg 17 verwendet werden, der sich an den Mittelwertweg 72 anschließt.

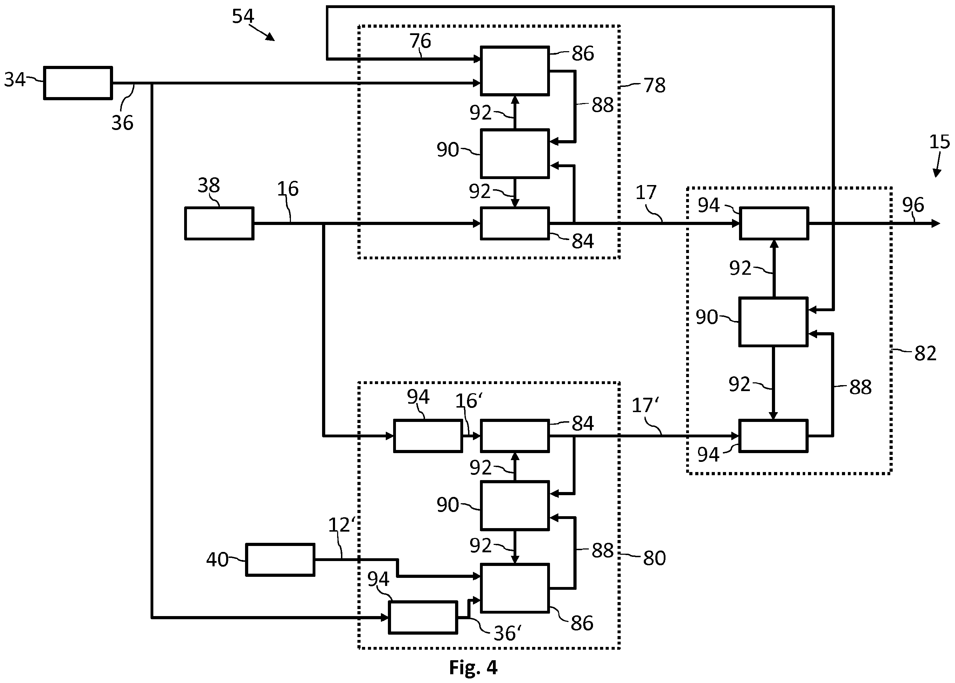

Eine Alternative zur Mittelwertbildung soll nachstehend anhand von Fig. 4 erläutert werden, die eine Prinzipdarstellung des Fusionsfilters 54 zeigt.

Der Fusionsfilter 54 ist in einen ersten Unterfilter 78, einen zweiten Unterfilter 80 und einen dritten Unterfilter 82.

Der erste Unterfilter 78 funktioniert im Prinzip wie ein herkömmlicher Fusionsfilter, wie er beispielsweise aus der WO 2013 / 037 844 A2 bekannt ist. Er umfasst einen beispielsweise aus der DE 10 2006 029 148 A1 bekannten Strapdown-Algorithmus 84, der basierend auf den Fahrdynamikdaten 16 den Weg 17 fortschreibt. Der erste Unterfilter 78 umfasst ferner ein Fahrzeugmodell 86 des Fahrzeuges 2, in dem basierend auf der zuletzt bestimmten Korrekturposition 76 und den Raddrehzahlen des Fahrzeuges 2 ein Vergleichsweg 88 bestimmt wird. Der Weg 17 und der Vergleichsweg 88 werden nun in einem Kalman-Filter 90 einander gegenübergestellt, wobei der Kalman-Filter 90 in an sich beispielsweise aus der WO 2013 / 037 844 A2 bekannter Weise je einen Fehlerhaushalt 92 für den Weg 17 und den Vergleichsweg 88 bestimmt. Basierend den Fehlerhaushalten 92 werden nun der Weg 17 und der Vergleichsweg 88 iterativ korrigiert. Der so bestimmte Weg 17 wird an den dritten Unterfilter 82 ausgegeben.

Auch der zweite Unterfilter 80 funktioniert im Prinzip wie ein oben genannter herkömmlicher Fusionsfilter. In diesem sind jedoch Speicher 94 vorhanden, die die Fahrdynamikdaten 16 und die Raddrehzahlen 36 so zwischenspeichern, dass in dem zweiten Unterfilter 80 der Weg 17' durch das zuvor erläuterte Zurückschreiben gewonnen werden kann. Aus den zwischengespeicherten Fahrdynamikdaten 16' kann dann ebenfalls in einem Strap-Down-Algorithmus 84 der Weg 17' zurückgeschrieben werden. Ein entsprechender Vergleichsweg 88 kann dann basierend auf den zwischengespeicherten Raddrehzahlen 36' und der aus dem GNSS-Empfänger 40 gewonnenen Absolutposition 12 in einem Fahrzeugmodell 86 bestimmt werden, das analog zum Fahrzeugmodell 86 im ersten Unterfilter 78 aufgebaut sein kann. Als Absolutposition 12 sollte dabei die Ziel-Absolutposition 12'verwendet werden. Dann kann die Fusion zwischen dem zurückgeschriebenen Weg 17' und dem Vergleichsweg 88 entsprechend dem ersten Unterfilter 78 in einem weiteren Kalman-Filter 90 stattfinden.

Der fortgeschriebene Weg 17 und der zurückgeschriebene Weg 17' können dann im dritten Unterfilter 82 in einem Speicher 94 hinterlegt und abschließend wieder mit einem Kalman-Filter 90 korrigiert werden, wobei die beiden Wege 17, 17' direkt im Speicher 94 korrigiert werden können. Der so korrigierte Weg 96 kann dann ausgegeben werden, wobei das Ende 74 des korrigierten Weges 96 als Korrekturposition 76 an den ersten Unterfilter 78 ausgegeben wird.

Der korrigierte Weg 96 kann dabei mit einem Blockansatz berechnet werden, wobei der korrigierte Weg 96 vollständig basierend auf einem zur Verfügung stehenden Weg 17, 17' bestimmt wird. Alternativ wäre jedoch auch ein Sliding-Window-Ansatz möglich, je nachdem wieviel Rechenleistung zur Verfügung steht.

Wie aus Fig. 4 unmittelbar ersichtlich, sind zur Bereitstellung der Lagedaten 15 basierend auf dem korrigierten Weg 96 oder dem Mittelwertweg 17 drei Kalman-Filter 90 notwendig. Diese Kalman-Filter 90 benötigen einen entsprechend hohen Rechenaufwand, der jedoch nur in wenigen Situationen, beispielsweise bei der Ausfahrt aus dem Tunnel 18 notwendig ist. Für diese vergleichsweise wenige Situationen müsste dabei eine entsprechend hochwertige Hardware bereitgestellt werden, was jedoch wirtschaftlich in keinem Verhältnis steht.

Daher wird im Rahmen des vorliegenden Ausführungsbeispiels vorgeschlagen, die Lagedaten 15 nicht jedes Mal mit dem Vorliegen einer neuen Absolutposition 12 basierend auf einem hohen Rechenaufwand bereitzustellen, sondern nur in bestimmten Intervallen, die deutlich größer sind, als die Aktualisierungsintervalle der Absolutposition. Dazwischen werden die Lagedaten 15 rein auf Fortschreibung aktualisiert.

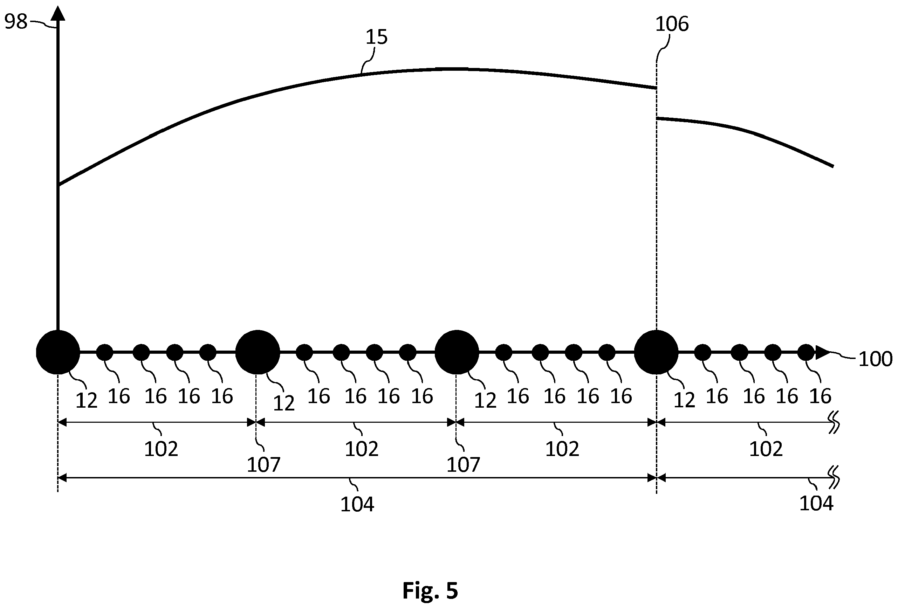

Das Prinzip soll kurz anhand von Fig. 5 erläutert werden, die in einem Diagramm die die Lage 98 des Fahrzeuges 2 beschreibenden Lagedaten 15 über die Zeit 100 zeigt.

Angenommen sei, dass jedes Mal innerhalb einer bestimmten Loopzeit 102 eine neue Absolutposition 12 mit dem GNSS-Empfänger 40 erfasst wird. Diese Loopzeit 102 soll nachstehend als ein Zeitschritt 102 verstanden werden. Im Rahmen der vorliegenden Ausführung soll die Absolutposition 12 nicht in jedem Zeitschritt 102 verwendet werden, sondern nur ein bestimmtes Vielfaches n an Zeitschritten 102, also innerhalb einem vorbestimmten Zeitraum 104, der größer ist, als die Loopzeit 102.

Das heißt, dass die Lagedaten 15 nur an einem Übergang 106 zwischen zwei dieser vorbestimmten Zeiträume 104 basierend auf der Absolutposition 12 bestimmt und gegebenenfalls korrigiert werden. Ansonsten werden die Lagedaten 15 nur durch fortschreiben der Fahrdynamikdaten 16 bestimmt.

Als Extremversion dieses Vorgehens wird die Absolutposition in jedem Zeitschritt 102 einmal gerechnet und dazwischen über die Fahrdynamikdaten fortgeschrieben. Eine andere Extremversion liegt vor, wenn die Absolutposition nur beim Einschalten einmalig errechnet wird und anschließend ausschließlich über Fahrdynamikdaten 16 fortgeschrieben wird.

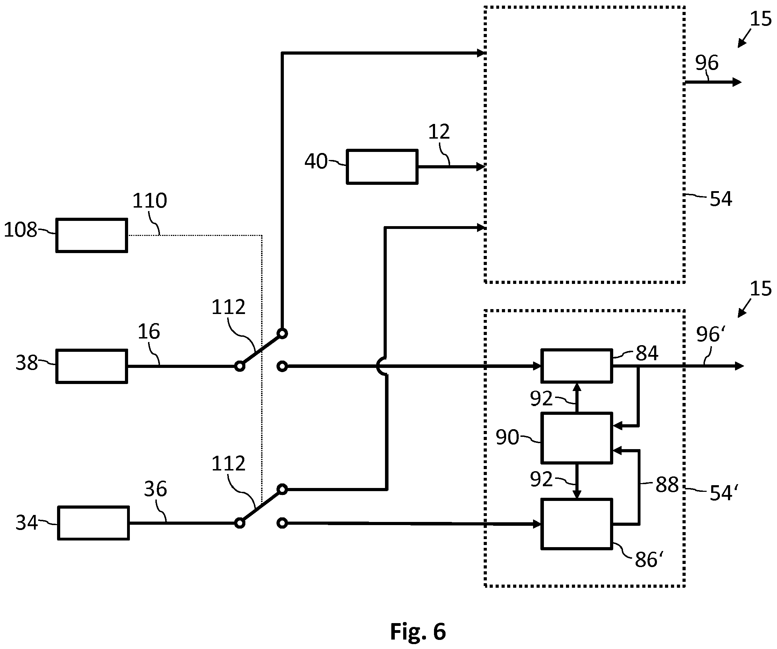

Zur Umsetzung dieses Prinzips können, wie in Fig. 6 gezeigt, zwei verschiedene Fusionsfilter vorhanden sein, die jeweils durch zwei verschiedene Algorithmen realisiert sind.

Einer der beiden Fusionsfilter 54 kann die Lagedaten 15 und damit den korrigierten Weg 96 in der Weise bestimmen, wie es in Fig. 4 gezeigt ist. Der Fusionsfilter 54 errechnet die Lagedaten 15 langzeitstabil, wofür ein entsprechend hoher Rechenaufwand notwendig ist. Hierzu können in dem langzeitstabilen Fusionsfilter 54 auch weitere Berechnungsansätze, wie beispielsweise tightly GNSS coupling oder deeply GNSS coupling zum Einsatz kommen. Dieser langzeitstabile Fusionfilter 54 kommt nur in einem Zeitbereich zwischen zwei der oben genannten vorbestimmten Zeiträume 104 also im zeitlichen Bereich eines Übergangs 106 zum Einsatz.

Zu anderen Zeitpunkten 107, zu denen ebenfalls eine Absolutposition 12 bestimmbar ist, kommt ein alternativer Fusionsfilter 54` zum Einsatz. Dieser besitzt ebenfalls einen Strap-Down-Algorithmus 84, der in der gleichen Weise aufgebaut sein kann, wie der Strap-Down-Algorithmus 84 im langzeitstabilen Fusionsfilter 54. Der Strap-Down-Algorithmus 84 des alternativen Fusionfilters 54' gibt ebenfalls einen Weg 96' als Lagedaten 15 aus, wobei auch dieser Weg 96' basierend auf Vergleichsdaten 88 in einem Kalman-Filter 90 präzisiert wird. Im Unterschied zum langzeitstabilen Fusionsfilter 54 werden die Vergleichsdaten 88 jedoch in einem alternativen Fahrzeugmodell 86' bestimmt, das die Vergleichsdaten 88 ohne die Absolutposition 12 bestimmt. Dieses Fahrzeugmodell 86' ist dabei ausgerichtet die Vergleichsdaten 88 mit einer hohen Kurzzeitpräzision zu bestimmen. Daher wird auch der Weg 96' aus dem alternativen Fusionsfilter 54' mit einer hohen Kurzzeitpräzision bestimmt, was jedoch in der Summe nicht annähernd so rechenintensiv ist, wie die Bestimmung des korrigierten Weges 96 im langzeitstabilen Fusionsfilter 54.

Der Fusionsfilter 54' kann noch weiter vereinfacht werden, wenn er nicht sämtliche mögliche Eingangsdaten verwendet, sondern nur ein Subset, beispielsweise ausschließlich die Fahrdynamikdaten 16. Ebenso können einfachere Filter verwendet werden, beispielsweise Luenberger-Beobachter, die lediglich die Positionsveränderung bestimmen können. Alternativ können auch Odometer oder Verfahren aus der Odometrie angewendet werden.

Eine Steuerung 108 kann mit einem Steuersignal 110 die Weiterleitung der notwendigen Sensordaten 16, 36 an die beiden Fusionsfilter 54, 54` über Schalter 112 steuern. Alternativ können aber auch die Fusionsfilter 54, 54` entsprechend ein- und ausgeschaltet werden.

Die beiden Fusionsfilter 54, 54` können zur Erhöhung der Sicherheit auf verschiedenen Recheneinrichtungen implementiert sein.

## Patentansprüche

1. Verfahren zum Bestimmen von Lagedaten (15) eines Fahrzeuges (2) nach einem Key-Inbetween Konzept, gemäß welchem die Lagedaten (15) als Schlüsselpositionen mit hoher Genauigkeit und als zwischen den Schlüsselpositionen gelegene Inbetweenpositionen mit geringerer Genauigkeit ermittelt werden, das Verfahren umfassend:
- Bestimmen einer Schlüsselposition zu einem ersten Zeitpunkt (106) basierend auf einem ersten Algorithmus (54), bei dem eine Bewegung des Fahrzeuges (2) beschreibende Fahrdynamikdaten (16) und eine Absolutposition (12) des Fahrzeuges (2) fusioniert werden, wobei der erste Algorithmus (54) auf eine Langzeitstabilität der Lagedaten (15) optimiert ist,
- Bestimmen einer Inbetweenposition zu einem zweiten Zeitpunkt (107) basierend auf einem zweiten Algorithmus (54'), der zum ersten Algorithmus (54) vergleichsweise einfach, rechenressourcensparend und verschieden ist, wobei der zweite Algorithmus (54') auf eine Kurzzeitpräzision der Lagedaten (15) optimiert ist, und wobei die Lagedaten (15) beim zweiten Algorithmus (54') frei von der Absolutposition (12) bestimmt werden,
wobei die Bestimmung der Lagedaten (15) basierend auf dem zweiten Algorithmus (54') über einen vorbestimmten Zeitraum (102) mehrmals durchgeführt wird, bevor die die Bestimmung der Lagedaten (15) basierend auf dem ersten Algorithmus (54) wiederholt wird, und
wobei die Schlüsselposition auf Basis eines, von einer Start-Absolutposition (12) ausgehenden, fortgeschriebenen Wegs (17) und eines, von einer Ziel-Absolutposition (12') ausgehenden, zurückgeschriebenen Wegs (17'), korrigiert wird.

2. Verfahren nach Anspruch 1,
wobei beim zweiten Algorithmus (54') die Lagedaten (15) wenigstens basierend auf den Fahrdynamikdaten (16) nachgeführt werden.

3. Verfahren nach einem der vorstehenden Ansprüche,
wobei die Bestimmung von den Absolutpositionen (12,12') hin zu einem zwischen den Absolutpositionen befindenden Mittelpunkt durchgeführt wird.

4. Verfahren nach einem der vorstehenden Ansprüche,
wobei die Anzahl der Wiederholungen zur Bestimmung der Lagedaten (15) basierend auf dem ersten Algorithmus (54) innerhalb des Zeitraums (104) von der Verfügbarkeit von GNSS Signalen, Fahrtgeschwindigkeit, Gefahrensituation und / oder der zum Ausführen des Verfahrens zur Verfügung stehenden Rechenkapazität einer Recheneinrichtung angepasst wird.

5. Verfahren nach Anspruch 3,
wobei der Zeitraum zur Bestimmung der Lagedaten nach dem zweiten Algorithmus (54') danach ausgewählt wird, wofür eine Positionsanforderung vorliegt, insbesondere durch ein anderes Fahrzeugsystem.

6. Verfahren nach einem der vorstehenden Ansprüche,
wobei der erste Algorithmus (54) und der zweite Algorithmus (54') auf verschiedenen Recheneinrichtungen durchgeführt werden.

7. Steuervorrichtung zur Durchführung eines Verfahrens nach einem der vorstehenden Ansprüche 1 bis 6.

8. Fahrzeug (2), umfassend eine Steuervorrichtung nach Anspruch 7.

## Claims

1. Method for determining position data (15) of a vehicle (2) in accordance with a key-in-between concept, according to which the position data (15) are ascertained in the form of high-accuracy key positions and in the form of lower-accuracy in-between positions located between the key positions, the method comprising:
- determining a key position at a first time (106) based on a first algorithm (54), in which driving dynamics data (16) describing a movement of the vehicle (2) and an absolute position (12) of the vehicle (2) are fused, wherein the first algorithm (54) is optimized with regard to long-term stability of the position data (15),
- determining an in-between position at a second time (107) based on a second algorithm (54') that is comparatively simple, computing resource-saving and different with respect to the first algorithm (54), wherein the second algorithm (54') is optimized with regard to short-term precision of the position data (15), and wherein the position data (15), in the case of the second algorithm (54'), are determined in a manner free from the absolute position (12),
wherein the determination of the position data (15) based on the second algorithm (54') is performed multiple times over a predetermined time period (102) before the determination of the position data (15) based on the first algorithm (54) is repeated, and
wherein the key positions are corrected on the basis of a written-forward path (17) starting from a starting absolute position (12) and of a written-back path (17') starting from a target absolute position (12').

2. Method according to Claim 1,
wherein, in the case of the second algorithm (54'), the position data (15) are updated at least based on the driving dynamics data (16).

3. Method according to either of the preceding claims,
wherein the determination of the absolute positions (12, 12') is performed up to a midpoint located between the absolute positions.

4. Method according to one of the preceding claims,
wherein the number of repetitions for determining the position data (15) based on the first algorithm (54) within the time period (104) is adapted based on the availability of GNSS signals, travel speed, risk situation and/or the computing capacity, available to carry out the method, of a computing apparatus.

5. Method according to Claim 3,
wherein the time period for determining the position data in accordance with the second algorithm (54') is selected in line with for what a position requirement is present, in particular by another vehicle system.

6. Method according to one of the preceding claims,
wherein the first algorithm (54) and the second algorithm (54') are executed on different computing apparatuses.

7. Control device for performing a method according to one of preceding Claims 1 to 6.

8. Vehicle (2), comprising a control device according to Claim 7.

## Revendications

1. Procédé de détermination de données de position (15) d'un véhicule (2) selon un concept de création d'images intermédiaires (Key-Inbetween), conformément auquel les données de position (15) sont déterminées en tant que positions clés avec une précision élevée et en tant que positions intermédiaires situées entre les positions clés avec une précision plus faible, le procédé comprenant :
- la détermination d'une position clé à un premier instant (106) sur la base d'un premier algorithme (54) conformément auquel des données de dynamique de conduite (16) décrivant un déplacement du véhicule (2) et une position absolue (12) du véhicule (2) sont fusionnées, dans lequel le premier algorithme (54) est optimisé pour une stabilité à long terme des données de position (15),
- la détermination d'une position intermédiaire à un second instant (107) sur la base d'un second algorithme (54') qui est comparativement simple, économe en ressources de calcul et différent du premier algorithme (54), dans lequel le second algorithme (54') est optimisé pour une précision à court terme des données de position (15), et dans lequel les données de position (15) sont déterminées indépendamment de la position absolue (12) dans le second algorithme (54'),
dans lequel la détermination des données de position (15) sur la base du second algorithme (54') est effectuée plusieurs fois sur une période de temps prédéterminée (102) avant que la détermination des données de position (15) sur la base du premier algorithme (54) ne soit répétée, et
dans lequel la position clé est corrigée sur la base d'un trajet mis à jour (17) à partir d'une position absolue de départ (12) et d'un trajet réécrit (17') à partir d'une position absolue cible (12').

2. Procédé selon la revendication 1,
dans lequel, dans le cas du second algorithme (54'), les données de position (15) sont mises à jour au moins sur la base des données de dynamique de conduite (16).

3. Procédé selon l'une des revendications précédentes,
dans lequel la détermination est effectuée des positions absolues (12, 12') vers un point central situé entre les positions absolues.

4. Procédé selon l'une des revendications précédentes,
dans lequel le nombre de répétitions pour la détermination des données de position (15) sur la base du premier algorithme (54) au cours de l'intervalle de temps (104) est adapté en fonction de la disponibilité de signaux GNSS, de la vitesse de déplacement, de la situation de danger et/ou de la capacité de calcul d'un dispositif de calcul disponible pour mettre en oeuvre le procédé.

5. Procédé selon la revendication 3,
dans lequel l'intervalle de temps de détermination des données de position conformément au second algorithme (54') est sélectionnée en fonction de la raison pour laquelle il existe une demande de position, en particulier par un autre système de véhicule.

6. Procédé selon l'une des revendications précédentes,
dans lequel le premier algorithme (54) et le second algorithme (54') sont exécutés sur des dispositifs de calcul différents.

7. Dispositif de commande pour la mise en oeuvre d'un procédé selon l'une des revendications 1 à 6 précédentes.

8. Véhicule (2), comprenant un dispositif de commande selon la revendication 7.
